# EUROPEAN PATENT APPLICATION

(11) **EP 1 227 278 A2**
(43) Date of publication of application: **31.07.2002**
(21) Application number: 02008240.0
(22) Date of filing: 03.06.1999
(51) Int. Cl.: F23L 9/02, F23G 5/16, F23J 1/00

(54) **Waste treatment apparatus**

(30) Priority: 12.10.1998 JP 28985898; 30.10.1998 JP 30933098; 30.10.1998 JP 30933198; 11.01.1999 JP 360899; 11.01.1999 JP 360999
(62) Divisional of application: 99923884.3
(71) Applicant: NKK CORPORATION, Tokyo 100-0005 (JP)
(72) Inventor: Suzuki, Minoru, Chiyoda-ku, Tokyo 100-0005 (JP); Teratsuji, Kazuhiro, Chiyoda-ku, Tokyo 100-0005 (JP); Fujisawa, Yoshinari, Chiyoda-ku, Tokyo 100-0005 (JP); Nakahara, Keisuke, Chiyoda-ku, Tokyo 100-0005 (JP)
(74) Representative: HOFFMANN - EITLE

(57) **Abstract**

A waste treatment apparatus comprising: a waste incineration furnace having a main combustion chamber (3) and a waste heat boiler (18), said waste incineration furnace incinerating waste and generating ash and flue gas; a recycle pipe for carrying the flue gas of the waste incineration furnace into the main combustion chamber; and an ejector (34), which is connected to the recycle pipe, for recycling the flue gas to the main combustion chamber.

## Description

### FIELD OF THE INVENTION

The present invention relates to a waste treatment apparatus, particularly to a waste incineration furnace.

### BACKGROUND OF THE INVENTION

There are various types of incineration and fusion treatment facilities dealing with municipal waste and other waste. These facilities include:
(1) The ones comprising a grate incineration furnace and a slag-tap ash fusion furnace directly connected downstream from a combustion zone in the grate incineration furnace, thus letting a gas duct common use for both the incineration furnace and the ash fusion furnace, (disclosed in Japanese Patent Laid-Open No. 96128/1986; hereinafter referred to as "Prior Art 1");
(2) The ones comprising a grate incineration furnace and a burner surface fusion furnace directly connected downstream from a combustion zone in the grate incineration furnace, (disclosed in Japanese Patent No. 2681140; hereinafter referred to as "Prior Art 2");
(3) The ones comprising an incineration furnace, a rotary kiln ash-fusion furnace in which a dam is formed and which is located at exit side of the incineration furnace, while installing heating burners at exit portion of the ash fusion furnace, (disclosed in Japanese Patent Laid-Open No. 312312/1993; hereinafter referred to as "Prior Art 3");
(4) The ones comprising an incineration furnace and an incinerated ash fusion furnace directly connected downstream from a combustion zone in the incineration furnace to utilize flue gas inside of the incineration furnace as an oxidizing agent and to fuse the ash using unburnt ingredients of the incinerated ash as the heat source, (disclosed in Japanese Patent Publication No. 3296/1994; hereinafter referred to as "Prior Art 4");
(5) The ones described in (4), wherein hot air is injected through the hearth of the ash fusion furnace to increase the combustion temperature inside of the furnace thus to enhance the ash fusion, (disclosed in Japanese Patent Laid-Open No. 112854/1997; hereinafter referred to as "Prior Art 5"); and
(6) The ones comprising an incineration furnace and an incinerated ash fusion furnace directly connected downstream from a combustion zone in the incineration furnace, while preheated air is injected from the ceiling of the ash fusion furnace toward the ash layer to fuse the ash using the unburnt ingredients of the incinerated ash as the heat source, (disclosed in Japanese Patent No. 2681140; hereinafter referred to as "Prior Art 6").

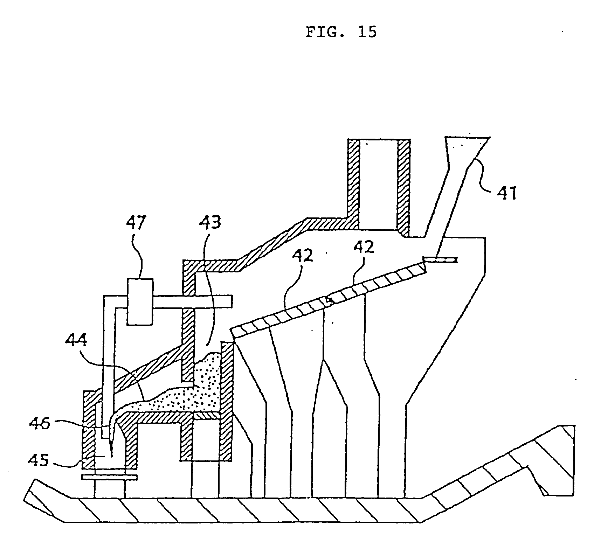

A typical example of the waste treatment facilities in the prior arts is shown in Fig. 15 (for Prior Art 2). The facility comprises a hopper 41, grates 42, an ash hopper 43, a fusion chamber 44, a slag discharge chute 46, and an air preheater 47, while the reference number 45 represents fused slag.

Municipal waste which is charged to the hopper 41 is sent onto the grates 42 via a waste feeder, and the waste is ignited and incinerated by air coming from below the grates 42 and by radiation heat inside of the furnace while moving over the grates 42. The ash remained after the incineration of the waste is sent to the fusion chamber 44 via the ash hopper 43. In the fusion chamber 44, the ash is fused by the combustion heat of fusion burners or of unburnt ingredients of the ash, and by the radiation heat inside of the furnace, thus becomes the fused slag 45, which fused slag 45 is then discharged to outside of the furnace via the slag discharge chute 45. The flue gas generated in the ash fusion furnace is recycled to the incineration furnace via an air preheater 47. When the unburnt ingredients of the ash are used as a heat source, preheated air is supplied into the ash fusion furnace. On the other hand, the combusted flue gas generated in the incineration furnace passes through a waste heat boiler, a dehumidifier, a bag filter, a flue gas treatment unit, and other treatment units, then goes out to atmosphere.

Any type of waste incineration and fusion furnaces in the prior arts does not have a means to render the space distribution uniform nor a means to average the variations with time for the temperatures inside of ash fusion furnace. Furthermore, all of them treat the fusible incinerated ash and the materials unsuitable for fusion (relatively large pieces and lumps of metals, ceramics, and other foreign matter) together, not separating from each other.

Regarding the units for recycling flue gas into the incineration furnace, there are known ones including a unit to use a recycle blower to supply the flue gas into the furnace, and a unit which is disclosed in Japanese Patent No. 2761417, which uses action of a cold air ejector to charge the flue gas into the furnace.

Application of the above-described Prior Arts 1 through 6 to the field of municipal waste incineration and fusion causes separate or common problems described below.
(1) Dust and slag likely solidify in a part in local low temperature zones inside of the ash fusion furnace, thus the cleaning of inside of the furnace is unavoidable. (Prior Arts 1 through 6)
(2) Since properties of combusted flue gas and of incinerated ash vary, stable tapping is difficult to attain. (Prior Arts 1 through 6)
(3) Relating to (1) and (2), slag properties show significant dispersion, and the effective use of slag is difficult. (Prior Arts 2 through 6)
(4) When the stable operation or the low pollution operation of the incineration furnace is positioned as a priority variable, the heat generation of the unburnt gas inside of the furnace or that of the unburnt ingredients of ash as the main heat source of the ash fusion furnace becomes low. As a result, a new external heat source such as auxiliary fuel and hot air are necessary, which increases the running cost and makes the operation complex. (Prior Arts 3 through 6)
(5) Since there provided no means to suppress emissions of ash from the exit of ash fusion furnace, high slag-formation efficiency cannot be attained. (Prior Arts 2 through 6)
(6) Since the design makes the most part of the combusted flue gas pass through the ash fusion furnace, it is difficult to render the temperatures inside of the ash fusion furnace uniform and to perform compact design of the ash fusion furnace. (Prior Art 3)
(7) Burner flame may form local high temperature sections and may damage the inside walls by burning. (Prior Arts 2 and 3).
(8) Part of incinerated ash and of dust likely fuse and solidify at near the inlet of ash fusion furnace, and some of materials unsuitable for fusion are likely caught at bend sections. Thus, bridging tends to occur, and long period of stable operation is difficult. ( Prior Arts 2,4 through 6 )

Furthermore, the conventional flue gas recycle system has problems described below. That is, the flue gas recycle system using a recycle blower has the problems:
1) The blower constituting parts have a limit of heat resistance, and the recycle of high temperature flue gas is difficult. As a result, the improvement in heat efficiency through the flue gas recycle remains at a low level;
2) Since dust and other materials in flue gas attach to blades or other portion of the blower, regular shut down of the facility for cleaning is required;
3) Investment cost of the blower is high;
4) Running cost of the blower, including electric power cost and maintenance cost, is high;
5) For the case of flue gas blowing into the incineration furnace, the CO₂ concentration of the flue gas is too low so that the flame stability becomes worse; and
6) Since the pressure of injecting the flue gas into the furnace is limited by the discharge pressure of the blower, increase in the injection pressure is difficult.

In the case that the flue gas recycle is performed using the cold air ejector action, the following-described problems arise:
1) Increase in temperature of flue gas to be injected gives distinctive difference in viscosity between the cold air as the driving fluid and the flue gas, so the ejector effect becomes less; and
2) The average temperature of a mixed gas of the cold air and the flue gas to inject into the furnace becomes low, and the stability of flames inside of the furnace becomes worse. Relating to the phenomenon, heat efficiency becomes low.

### DISCLOSURE OF THE INVENTION

It is an object of the present invention to achieve a long and stable operation, to achieve an increased performance and multi-function operation, and further to achieve energy saving and low pollution operation as the total system.

To achieve the object, the present invention provides a waste treatment apparatus which comprises the features set forth in claim 1.

The waste apparatus is provided with an ejector which preferably transfers the flue gas of the waste incineration furnace using high temperature air as the driving fluid to inject the flue gas into the main combustion chamber.

Since the ejector unit utilizing the high temperature air as the driving fluid transfers the flue gas (in many cases the secondary combusted flue gas at the exit of waste heat boiler) of the waste incineration furnace, and injects the flue gas into the waste incineration furnace, it is possible to inject the flue gas at a high velocity into the furnace utilizing the high viscosity and kinetic energy of the high temperature air. In addition, the action of the ejected flow, direct control of the flame inside of the furnace becomes possible. Furthermore, since the temperature of the mixed gas of the high temperature air and the flue gas is high, the mixed gas provides a high viscosity, thus further efficient agitation of atmosphere inside of the furnace is attained.

Also the power consumption for the flue gas recycle is less than that of blower or other means, so the energy saving operation is achieved. In addition, since the stable transfer of high temperature gas containing dust is available, the recycle of high temperature flue gas containing combustible gas is achieved, which increases the heat efficiency and further achieves energy saving operation. The ejector may be placed in the recycle route of the flue gas, and may be placed at the injection opening of the furnace. For the former case, however, the flame is formed directly downstream from the ejector, so the refractory work should be applied to the sections downstream from the ejector.

The waste treatment apparatus is provided with an ejector which preferably transfers flue gas of the waste incineration furnace to inject the flue gas into main combustion chamber using a flue gas downstream from an induced fan located in a flue gas venting system as the driving fluid.

Since the flue gas downstream from the induced fan located in the flue gas venting system is used as the driving fluid, no blower exclusive use for recycling the flue gas is necessary, and sensible heat of the low temperature flue gas which passed through the flue gas treatment unit is able to be recovered. In addition, since O₂ in the low temperature flue gas is able to be used as O₂ for combustion in the incineration furnace, the quantity of supplied air is reduced.

### BRIEF DESCRIPTION OF THE DRAWINGS

Fig. 1 shows a waste treatment apparatus.

Fig. 2 shows a system diagram of flue gas, steam, and other materials around a waste incineration and fusion furnace.

Fig. 3 shows a detailed drawing of an example of ash fusion furnace.

Fig. 4 shows a detailed drawing of a tapering down flue gas duct and a connection section between a section for detecting and removing materials unsuitable for fusion and an ash fusion furnace.

Fig. 5 shows a detailed drawing of a section for detecting and removing materials unsuitable for fusion.

Fig. 6 shows a waste treatment apparatus, wherein the ash fusion furnace is a rotary kiln furnace.

Fig. 7 shows a schematic drawing of recycle system of a combustion gas inside of furnace and a combusted flue gas using an ejector as an example of a mode according to the present invention.

Fig. 8 shows a waste treatment apparatus.

Fig. 9 shows a system diagram of flue gas, steam, and other materials around a waste incineration and ash heat treatment furnace.

Fig. 10 shows a detailed drawing of an example of ash heat treatment furnace.

Fig. 11 shows a detailed drawing of a tapering down flue gas duct and a connection section between a section for detecting and removing materials unsuitable for heat treatment and an ash heat treatment furnace.

Fig. 12 shows a detailed drawing of a section for detecting and removing materials unsuitable for heat treatment.

Fig. 13 shows a waste treatment apparatus.

Fig. 14 shows a schematic drawing of recycle system of a combustion gas inside of furnace and a combusted flue gas using an ejector as an example of a mode according to the present invention.

Fig. 15 shows an example of waste incineration and fusion furnace of prior art.

### PREFERRED EMBODIMENT FOR CARRYING OUT THE INVENTION

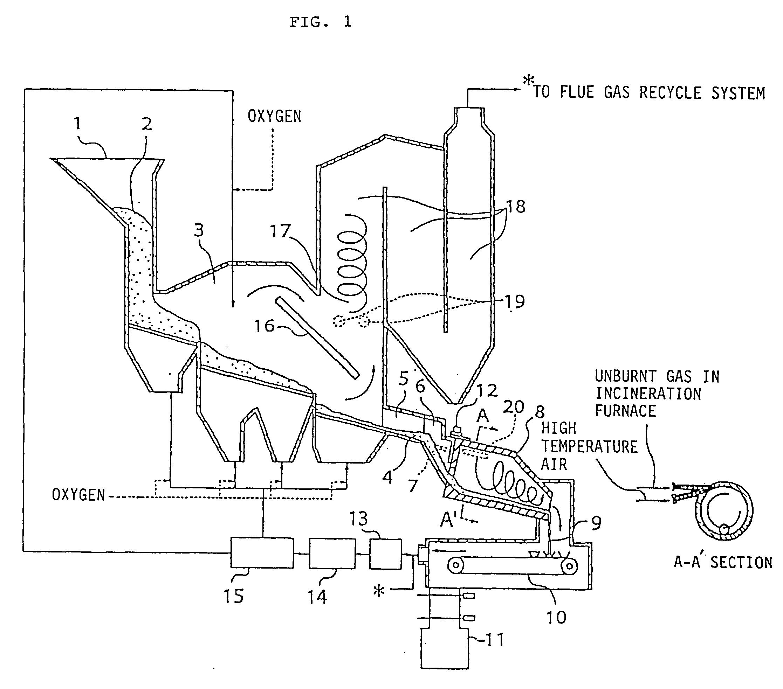

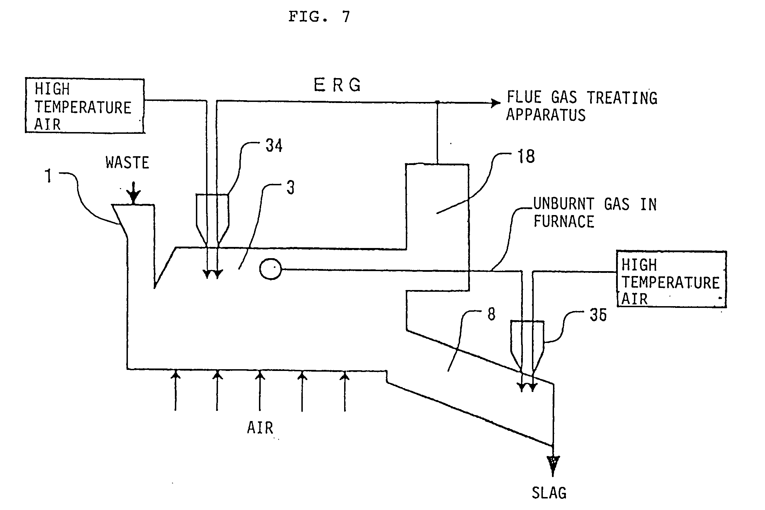

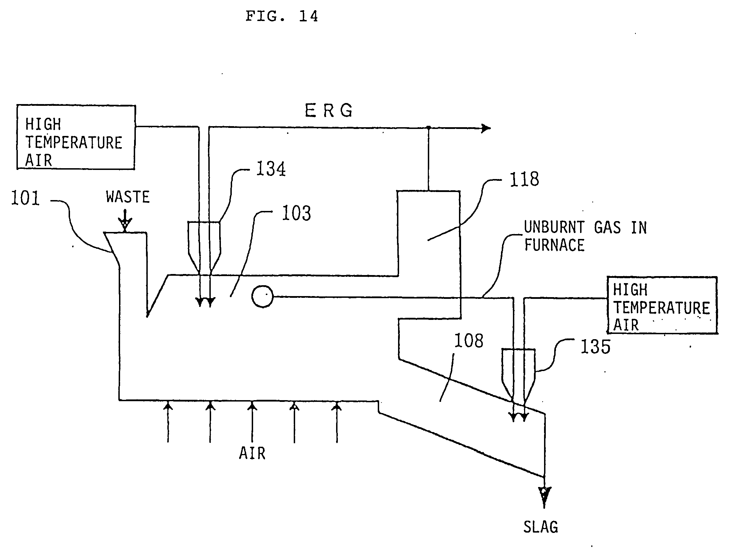

Examples of waste treatment apparatuses are described in the following referring to the drawings, wherein Figs. 7 and 14 show a waste treatment apparatus according to the present invention. Fig. 1 shows a waste treatment apparatus. In the figure, the reference number 1 represents a hopper, 2 represents the waste, 3 represents a main combustion chamber, 4 represents the incinerated ash, 5 represents a tapering down gas duct, 6 represents a section for detecting and removing materials unsuitable for fusion, 7 represents grates, 8 represents an ash fusion furnace, 9 represents the fused slag, 10 represents a slag conveyer, 11 represents a slag basin, 12 represents an adjusting damper, 13 represents a dust collector, 14 represents a heat exchanger, 15 represents a flue gas recycle blower, 16 represents an intermediate ceiling, 18 represents a waste heat boiler, 19 represents an injection opening for agitation gas inside of the furnace, and 20 represents a gas injection opening.

The waste 2 charged to the hopper 1 is ignited to burn in the main combustion chamber 3 by hot air supplied from beneath the grates or by stabilizing burners (not shown) located inside of the main combustion chamber, as described later. The incinerated ash 4 generated by the combustion of waste passes through the tapered down gas duct 5 and enters the section for detecting and removing materials unsuitable for fusion 6. The section for detecting and removing materials unsuitable for fusion 6 is provided with a detector for detecting materials unsuitable for fusion and a device for discharging thus detected materials unsuitable for fusion to outside the furnace. The incinerated ash 4 after removing the materials unsuitable for fusion flows down through the grates 7, and is fused in the ash fusion furnace 8 to become the fused slag 9, which is then fallen down onto the slag conveyer 10, and is stored in the slag basin 11. Alternatively, both the slag conveyer 10 and the slag basin 11 are not provided, and the fused slag may be dropped into water to produce granulated slag.

Between the section for detecting and removing materials unsuitable for fusion 6 and the ash fusion furnace 8, an adjusting damper 12 is located to suppress the flow rate of flue gas from the waste incineration furnace to the ash fusion furnace 8, thus preventing the combusted flue gas from entering into the ash fusion furnace 8. Alternatively, the adjusting damper 12 may not be installed, and the operation may be done to keep the upstream side of the ash fusion furnace 8 filled with the incinerated ash 4, thus letting the filled incinerated ash 4 function as a material seal.

As described later, a gas injection opening 20 is located to the ash fusion furnace 8. As seen in A-A' cross sectional view in Fig. 1, a mixed gas of high temperature air and the combustible gas (unburnt gas inside of the incineration furnace) generated in the waste incineration furnace is injected into the furnace at a high velocity through the gas injection opening 20. Since the direction of injecting high temperature mixed gas is tangential to the inner wall surface of the ash fusion furnace 8, as illustrated in A-A' view, the injected high temperature mixed gas forms a swirling flame or a cylindrical flame inside of the ash fusion furnace 8, as shown in the figure.

As a result, the inner walls of the furnace are heated almost uniformly by the radiation or direct heat transfer from the flame. Consequently, troubles of burning caused from local solidification of dust and slag or from superheating of inner walls are suppressed. Furthermore, owing to the centrifugal effect of the swirling flow of atmosphere inside of the ash fusion furnace, the incinerated ash and the dust in gas stream are collected by the slag coating layer at the surface section of the inner walls, so that a high slag-formation efficiency is attained.

The flue gas generated from the combustion of unburnt gas of the incineration furnace at inside of the ash fusion furnace 8 is sent to the flue gas recycle system of the waste incineration furnace. After separating dust in the dust collector 13, the flue gas is cooled in the heat exchanger 14, which is then mixed with oxygen via the flue gas recycle blower 15, and is again injected into the waste incineration furnace. Alternative to that type of system, there may use a system in which a separate blower is applied to increase the pressure of the flue gas passed through the ash fusion furnace 8, and to use the pressurized flue gas as an agitation gas in a secondary combustion chamber 17 which is described later.

Within the main combustion chamber 3, an intermediate ceiling 16 is located to divide the flue gas stream into two routes (shown in arrows in the figure). The flue gas passing over the intermediate ceiling 16 is rich in unburnt gas, while the flue gas passing below the intermediate ceiling 16 is rich in unreacted oxygen. Nevertheless, the composition of each of these flue gases is relatively stable.

A part of the flue gas passing over the intermediate ceiling 16, or the flue gas rich in unburnt, is taken out to be injected into the ash fusion furnace as the unburnt gas in the incineration furnace to use as the main heat source of the ash fusion furnace 8. That is, a part of the flue gas passing over the intermediate ceiling 16 is sucked into the ash fusion furnace 8 via the gas injection opening 20 by a negative pressure generated by the flue gas recycle blower 15. Consequently, no special blower to inject the unburnt gas in the incineration furnace into the ash fusion furnace 8 is required.

On the other hand, the flue gas passing below the intermediate ceiling 16 contains small amount of unburnt ingredients. Accordingly, even when the flue gas is injected into the ash fusion furnace 8, the gas does not function as the fuel but rather gives bad influence by reducing the temperature in the ash fusion furnace 8. The above-described adjusting damper 12 acts to interfere the inflow of the flue gas into the ash fusion furnace 8. In concrete terms, the internal pressure of the furnace at near the boundary between the main combustion chamber 3 and the tapered down gas duct 5 and the internal pressure of the ash fusion furnace 8 are detected, and the opening of the damper 12 is regulated to keep the latter internal pressure at a slightly higher level than the former internal pressure.

Depending on the design condition of the furnace, the latter internal pressure unavoidably becomes lower than the former internal pressure, (for example, in a mode shown in Fig. 1, the unburnt gas in the incineration furnace is sent into the ash fusion furnace 8 using the flue gas recycle blower 15, so the latter internal pressure becomes lower than the former internal pressure.) Even in that case, the damper opening is adjusted to keep the pressure difference as small as possible, thus to prevent the flue gas from coming in the ash fusion furnace via the tapered down gas duct 5 as far as possible.)

Most part of the flue gas passed over/beneath the intermediate ceiling 16 enter the secondary combustion chamber 17, where the flue gas is agitated by an agitation gas which is injected from the injection openings 19 for agitation gas to form a swirling flow, thus efficiently conducting the secondary combustion. After subjected to heat exchange in the waste heat boiler 18, most part of the flue gas enter the flue gas recycle system which comprises the dust collector 13, the heat exchanger 14, and the flue gas recycle blower 15, then is mixed with oxygen, and is injected again into the waste incineration furnace. A part of the flue gas is sent to the flue gas treatment unit to remove dust and toxic materials, then is vented to atmosphere via a stack.

According to the apparatus shown in Fig. 1, a mixed gas of oxygen and the flue gas passed through the flue gas recycle blower 15 is injected into the main combustion chamber 3 from beneath the grates. If, however, the flue gas contains HCl or other corrosive compounds, the grates may be corroded. In that case, it is preferable to inject air from beneath the grates, and preferably the mixed gas of oxygen and the flue gas is directly injected into the main combustion chamber.

The high temperature air which is injected into the ash fusion furnace 8 is prepared by heating air using a hot air generator (not shown). Generally, a fuel is combusted, and the air is heated by the combustion heat. When the combusted flue gas generated in the process is used as the agitation gas which is injected through the opening 19 for agitation gas, the agitation of atmosphere inside of the furnace is attained without changing the excess air ratio, and reduction of NOx content in the flue gas is effectively done. In addition, the sensible heat of the combusted flue gas of the hot air generator is able to be recovered by the waste heat boiler 18.

According to the example mode, a mixed gas of unburnt gas in the incineration furnace with high temperature air is injected into the ash fusion furnace 8. The high temperature air may be replaced with an oxidizing agent in which oxygen content is controlled. The oxidizing agent is, for example, produced by mixing oxygen with the flue gas of waste incineration furnace. With the preparation method, when the oxygen concentration in the oxidizing agent is set to a high level, the absolute flow rate of the oxidizing agent reduces, thus the gas retention time in the ash fusion furnace increases, which achieves further high slag forming efficiency. By setting the oxygen concentration in the oxidizing agent to a low level, the low NOx combustion in the ash fusion furnace is realized.

In addition, it is preferred to detect the temperature inside of the ash fusion furnace 8 and to maintain the temperature to a constant level by regulating the temperature of the high temperature air or of the oxidizing agent in which the oxygen concentration is controlled. By the action, even when the condition of the waste incineration furnace varies, and varying the properties of combusted flue gas and of incinerated ash, long and stable operation is secured. Owing to the advantages, even if the operation gives the priority of stability and pollution reduction at the waste incineration furnace, the variations of properties of slag generated in the ash fusion furnace 8 are suppressed to a low level.

Alternatively, a feeder of an auxiliary fuel may be installed to regulate the temperature inside of the ash fusion furnace 8 by injecting the auxiliary fuel into the ash fusion furnace 8 and by regulating the flow rate of the auxiliary fuel. Since the temperature inside of the ash fusion furnace 8 is accurately controlled, the temperature inside of the ash fusion furnace can promptly be re-adjusted without changing the operating condition of the incineration furnace even when the condition of the incineration furnace suddenly becomes worse or the tap opening tends to be plugged by some causes. Owing to the advantageous characteristic, the plant operation hours are able to be maintained to a high level. Furthermore, since the temperatures of the incineration furnace and of the ash fusion furnace can be separately adjusted, the time for start up and shut down of the plant is shortened.

The injecting auxiliary fuel is preferably a fuel containing carbon in a form of, for example, powder. With that type of fuel, the fuel containing carbon is pressed against the inner wall surface by the centrifugal effect as in the case of ash, further the fuel containing carbon burns at the place, thus the atmosphere in the vicinity of ash becomes reducing atmosphere. Consequently, the vaporization of heavy metals from ash is further enhanced. Since the region near the inner wall surface also becomes a reducing atmosphere, the burning damage of the inner walls is suppressed. As a result, the operation hours of the facility increases, and the maintenance cost for replacing furnace materials decreases.

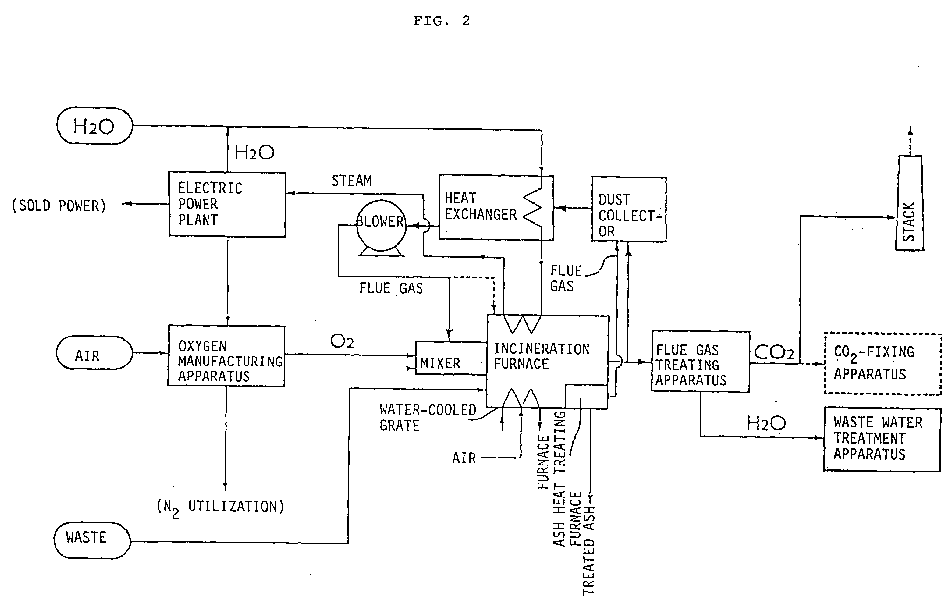

Fig. 2 shows a system diagram of flue gas, steam, and other materials around a waste incineration and fusion furnace.

The oxygen separated from air by an oxygen production unit is mixed with the flue gas of the flue gas recycle system in a mixer, then the mixture is supplied to the incineration furnace to incinerate the waste. Most part of the flue gas of the incineration furnace enter the flue gas recycle system which comprises a dust collector, a heat exchanger, and a blower. The flue gas is mixed with oxygen, then is again charged to the incineration furnace. In this case, air is injected from beneath the grates, while the flue gas which is mixed with oxygen in the mixer is fed directly into the combustion chamber. By varying the ratio of mixing flue gas and oxygen, the state of incineration of waste inside of the incineration furnace is able to be controlled. In addition, different from the case of air injection, excessive amount of nitrogen is not fed into the furnace, thus the flue gas volume becomes less, and the compact design of the flue gas treatment facility is available.

As of the flue gas which does not flow into the flue gas recycle system, a part thereof enters the ash fusion furnace 8, while the other thereof enter the flue gas treatment unit, as described before. The flue gas which combusted in the ash fusion furnace and heated the incinerated ash is sent to the dust collector as described above, then is fed to the flue gas recycle system. The flue gas which enters the flue gas treatment unit is vented to atmosphere via a stack after separating moisture. When a CO₂ fixing unit is provided, the CO₂ in the flue gas is fixed and is not emitted to atmosphere. The water content separated from the flue gas in the flue gas treatment unit is treated by a waste water treatment unit before discharging to outside of the system.

Most part of the sensible heat of the flue gas of the incineration furnace are used to generate steam at the flue gas boiler. The generated steam is used in a power plant. In the case of Fig. 2, the heat exchanger is used to heat the boiler feed water to the waste heat boiler.

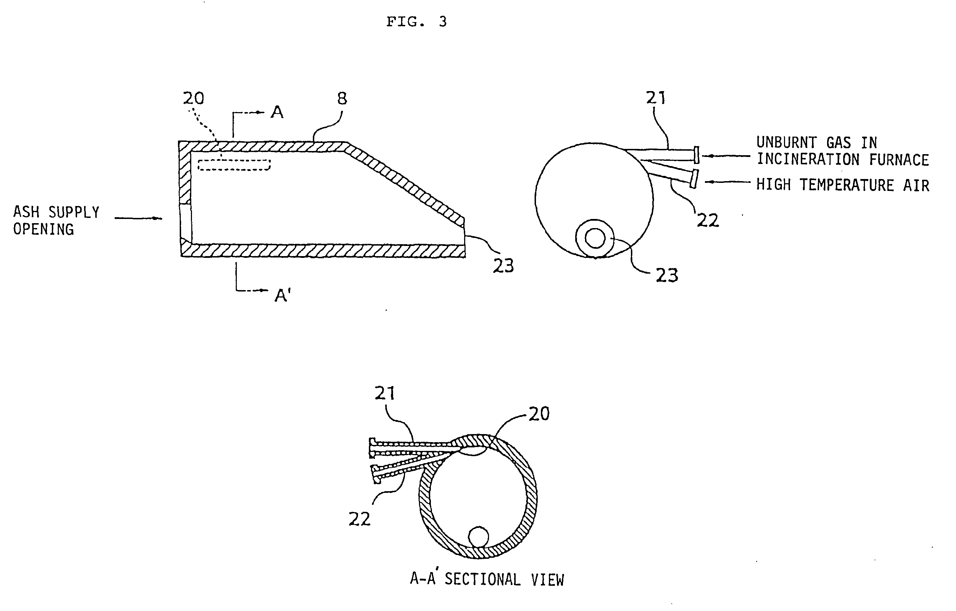

Fig. 3 shows a detailed drawing of an example of ash fusion furnace. In the succeeding figures, the same reference numbers are allotted to the same respective components described in previous figures, thus omitting the repetition of description. In Fig. 3, the reference number 21 represents an injection opening for unburnt gas in the incineration furnace, 22 represents an injection opening for high temperature air, and 23 represents an exit.

The ash fusion furnace 8 has a near-circular cross section, and has a shape of tapering down toward the exit 23. A gas injection opening 20 is located on a part of the side wall at upstream section of the furnace 8, which gas injection opening 20 is connected with the injection opening for unburnt gas in the incineration furnace, 21, and with the injection opening for high temperature air, 22. The flue gas injected from the injection opening for unburnt gas in the incineration furnace, 21, and the high temperature air injected through the injection opening for high temperature air, 22, are mixed together at the gas injection opening 20, which mixture is then injected in tangential direction to the cross section (near circular) of the ash fusion furnace 8, or along the circumference of the cross section. Thus, a swirling flame or a cylindrical flame nearly symmetrical to the furnace axis is formed.

As a result, the inner walls of the furnace are heated almost uniformly by the radiation or direct heat transfer from the flame. Consequently, troubles of burning caused from local solidification of dust and slag or from superheating of inner walls are suppressed. Furthermore, owing to the centrifugal effect of the swirling flow of atmosphere inside of the ash fusion furnace, the incinerated ash and the dust in gas stream are collected by the slag coating layer at the surface section of the inner walls, so that a high slag-formation efficiency is attained. Since the waste incineration furnace and the ash fusion furnace 8 are directly connected to each other, the high temperature ash is introduced into the ash fusion furnace 8 without cooled, and the heat efficiency increases.

The ash fusion furnace 8 is tapering down to the downstream side toward the exit 23 so that the swirling velocity of the flame increases in downstream side thereof. Accordingly, the collection efficiency of ash and dust increases. In addition, heating of inner walls by flame is performed more effectively. Furthermore, since the slag is tapped concentrated on one position, the tap opening is difficult to be plugged. Also the enhanced mixing of gas inside of the furnace promotes the low pollution flue gas.

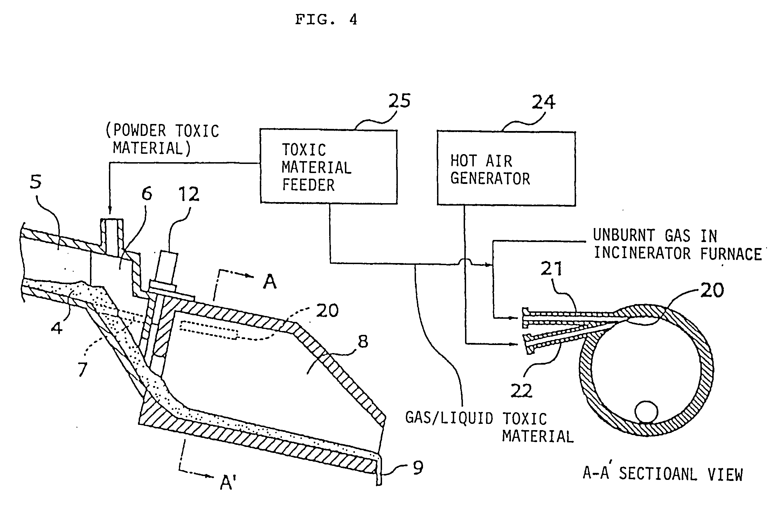

Fig. 4 shows a detailed drawing of a tapering down flue gas duct and a connection section between a section for detecting and removing materials unsuitable for fusion and an ash fusion furnace. In the figure, the reference number 24 represents a hot air generator, and 25 represents a toxic materials feeder. Powder toxic materials such as PCB are charged from the toxic materials feeder 25 into the section for detecting and removing materials unsuitable for fusion 6, while gaseous and liquid toxic materials such as chlorofluorocarbons and waste oils are injected into the fusion furnace 8 along with the unburnt gas in the incineration furnace through the injection opening for unburnt gas in the incineration furnace through the injection opening for unburnt gas in the incineration furnace, 21. These materials are decomposed in the high temperature ash fusion furnace 8, and finally are absorbed and treated in the flue gas treatment unit shown in Fig. 2.

The powder toxic materials are not injected from the injection opening for unburnt gas in the incineration furnace, 21, but is charged to the section for detecting and removing materials unsuitable for fusion, 6. If the powder materials are injected from the injection opening for high temperature air, 22, then they are scattered in the ash fusion furnace 8, and may be discharged untreated from the exit of the ash fusion furnace 8 before sufficiently progressing the decomposition thereof. Thus, the separate injections are applied to prevent that kind of troubles. Consequently, the decomposition is enhanced by charging the powder toxic materials to the section for detecting and removing materials unsuitable for fusion, 6, and by charging the gaseous and liquid toxic materials to the ash fusion furnace 8 along with the incinerated ash 4.

An adjusting damper 12 is located at boundary between the section for detecting and removing materials unsuitable for fusion, 6, and the ash fusion furnace 8, and the adjusting damper 12 is lifted by hydraulic cylinders to suppress the inflow rate of the flue gas from the waste incineration furnace to the ash fusion furnace 8, as described before. In actual operations, the opening of the damper is adjusted to nearly equal to the level of surface of the incinerated ash 4.

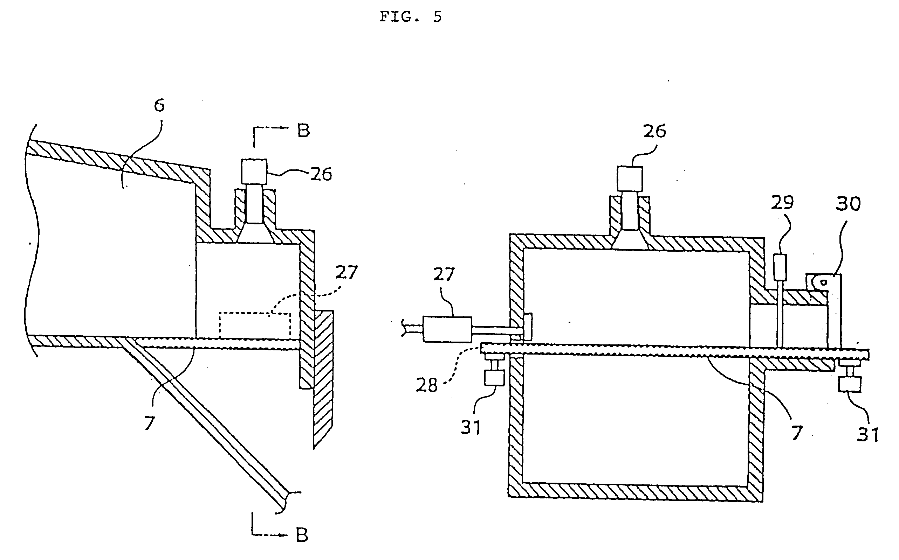

Fig. 5 shows a detailed drawing of a section for detecting and removing materials unsuitable for fusion. In Fig. 5, the reference number 26 represents a TV camera, 27 represents a pusher, 28 represents an intake of cooling air, 29 represents a shield plate, 30 represents a cover, and 31 represents a vibrator.

The materials unsuitable for fusion are the ones such as steels which do not combust nor fuse in the ash fusion furnace. When those kinds of materials enter the ash fusion furnace, they may damage the equipment, may induce bridging of incinerated ash at near the inlet of the furnace, and may plug the tap opening. Therefore, a grid 7 is located at the exit side of the section for detecting and removing materials unsuitable for fusion, 6, to prevent the materials unsuitable for fusion from dropping by the grid 7 thus to prevent from entering into the ash fusion furnace. The grid 7 has a hollow structure, and is cooled by air supplied from the intake of cooling air 27.

The materials unsuitable for fusion remained on the grid 7 are monitored by the TV camera 26, and they are discharged from the furnace by manipulating the pusher 27. At this moment, the shield plate 29 is lifted up to form a space to allow the materials unsuitable for fusion passes there through. The cover 30 is hung down from an upper structure by hinges, and is swung under a pressing force of the materials unsuitable for fusion, thus the materials unsuitable for fusion are discharged from the furnace through the cover 30 position. After that, the pusher 27 is returned to original position, and the shield plate 29 is lowered to seal the furnace.

The grid 7 is provided with the vibrator 31 to give excitation to the grid 7. By the action, the incinerated ash on the grid 7 falls down through the grid 7, not remaining on the grid 7, then is sent to the ash fusion furnace.

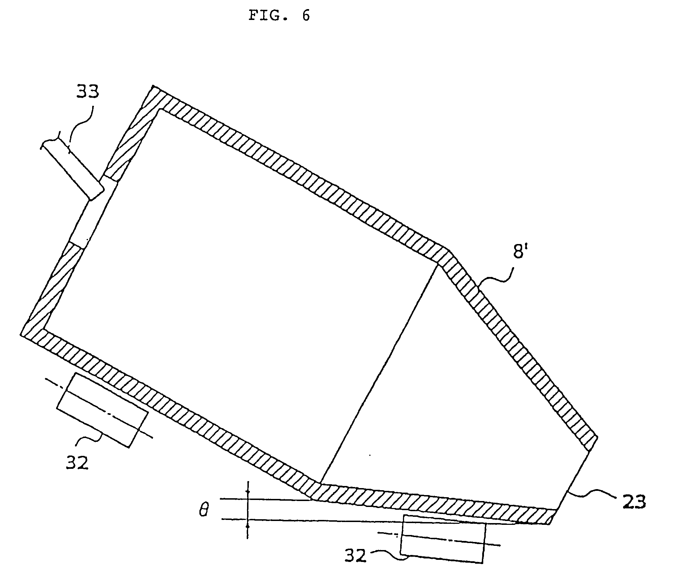

Fig. 6 shows a waste treatment apparatus, wherein the ash fusion furnace is a rotary kiln furnace.
In Fig. 6, the reference number 8' represents a rotary kiln which is the ash fusion furnace, 32 represents a roller, and 33 represents an injection opening for a mixed gas of combustible gas and high temperature air. The roller 32 rotates to drive the rotary kiln 8'. The rotary kiln 8' inclines downward toward downstream, and has a tapering down cross section to downstream side.

The combustible gas and the high temperature air are mixed together at immediately before the injection opening 33, then are injected into the rotary kiln 8'. The injection direction is a tilted angle to the wall face along the gas passage, not crossing the center axis of the rotary kiln 8'. As a result, a swirling flame or a cylindrical flame is formed in the rotary kiln 8'.

Since the ash fusion furnace is designed in a rotary kiln type, it inclines downward toward downstream and since the furnace rotates, even when materials unsuitable for fusion exist, they are not remained in the furnace but transferred forcefully toward downstream. In addition, dust attached to the inner wall surface of the ash fusion furnace is peeled off from the wall after growing to a certain size or thickness by its own weight, and it is transported to downstream, so there is no need of cleaning of inside the ash fusion furnace, which attaining labor saving and increased operation hours of the facility.

Fig. 7 shows a schematic drawing of recycle system of a combustion gas inside of furnace and a combusted flue gas using an ejector as an example of a mode according to the present invention. In Fig. 7, the reference numbers 34 and 35 represent ejectors. A part of the combusted flue gas (ERG) after the secondary combustion at near the inlet of the flue gas boiler 18 passes through a flue gas recycle piping to enter the ejector 34. To the ejector 34, high temperature air (at temperatures not less than the ignition point of the combusted flue gas) is supplied as the driving fluid. Thus, ERG is sucked to the ejector 34, where it is mixed with the high temperature air, and the mixture is injected into the main combustion chamber 3.

A part of the primary combusted flue gas (unburnt gas in the furnace) generated in the main combustion chamber 3 are withdrawn through a piping, and are fed to the ejector 35. To the ejector 35, high temperature air (at temperatures not less than the ignition point of the unburnt gas in the furnace) is supplied as the driving fluid. Thus, the primary combusted flue gas is sucked to the ejector 35, where it is mixed with the high temperature air, and the mixture is injected into the ash fusion furnace 8.

Ejector has a simple structure and has less possibility of deposition of dust in the flue gas. It is preferred to insert a high temperature air piping into the primary combusted gas piping of the flue gas pipeline, and to apply an ejector which has a simple structure to eject high temperature air along the direction of the primary combustion gas piping in the flue gas pipeline. It is also preferred to minimize the bend sections in the flue gas pipeline to prevent deposition of the dust of the flue gas into the piping. Furthermore, preferably a pulse burner is mounted in the flue gas pipeline to generate pulsation to the flue gas inside of the flue gas pipeline, thus suppressing the dust deposition.

When an induced fan is installed in the flue gas venting system in Fig. 2, or in the route from the incineration furnace to the stack, the flue gas downstream from the induced fan may be used instead of the high temperature air. Particularly when the induced fan is located at succeeding stage of the flue gas treatment unit, the flue gas downstream from the induced fan has already finished its dust removal in the flue gas treatment unit, and the flue gas has a positive pressure, so that the flue gas is suitably used as the driving fluid for ejector. By this means, a blower exclusive use for flue gas recycle is not necessary, which reducing the investment cost and reducing the electric power consumption. Since, in addition, the sensible heat of the flue gas as the driving fluid is recovered, the heat efficiency increases, thus attaining energy saving. Furthermore, In addition, since O₂ remained in the flue gas is able to be used as O₂ for combustion in the incineration furnace, the quantity of supplied air is reduced, and the quantity of flue gas is also reduced. As a result, energy saving and CO₂ measures are achieved.

Alternatively, though not shown in the figure, the atmosphere in the ash fusion furnace 8 may be monitored using O₂ meter, CO meter, CO₂ meter, and the like, and an atmosphere regulator inside of the ash fusion furnace may be applied to control either of the fuel fed from a stabilizing burner (not shown) located in the main combustion chamber 3, the oxidizing agent such as hot air injected into the main combustion chamber, or auxiliary gas or oxidizing agent such as high temperature air injected from the gas injection opening 20 into the ash fusion furnace 8 so as the atmosphere inside of the furnace to maintain a reducing state. In that manner, by maintaining the atmosphere inside of the ash fusion furnace 8 positively in a reducing state, the vaporization of heavy metals in ash is enhanced, and the decomposition ratio of dioxins is increased. In addition, the atmosphere in the vicinity of the inner wall surface of the ash fusion furnace becomes a reducing state, thus the inner walls are prevented from burning damage.

As described above, the waste incineration furnace and the incinerated ash fusion furnace are directly connected to each other, and a part of the unburnt gas generated in the incineration furnace and a highly reactive oxidizing agent such as high temperature air and air rich in oxygen are injected into the ash fusion furnace in a swirling pattern, thus continuously treating the generated ash by fusion while incinerating the waste. Consequently, there avoided the main disadvantages of prior arts, such as local solidification of slag caused from non-uniformity of temperature distribution inside of the ash fusion furnace and tap opening plugging caused from variations of properties of unburnt ingredients in combusted flue gas and in incinerated ash. Thus the long stable operation of the ash fusion furnace and the utilization of slag are attained, and the energy saving and the labor saving as the total system are realized.

Furthermore, by applying highly reactive oxidizing agent, auxiliary fuel, or swirling combustion for the ash fusion furnace, the stable combustion inside of the furnace is enhanced, and the discharge concentration of toxic materials such as dioxins and CO is kept to a low level, further the control of furnace becomes easy, and the burning damage of inner walls and other portions is avoided.

Also, by additional application of a unit for removing materials unsuitable for fusion, an adjusting damper, or a rotary kiln to the ash fusion furnace, effective heat is transmitted to the incinerated ash to be fused, and the troubles of slag solidification inside of the ash fusion furnace is eliminated, thus drastically increasing the operation hours.

On the other hand, by applying a tapering down furnace shape as a means to suppress the emissions of ash from the exit of the ash fusion furnace, the swirling velocity significantly increases toward downstream, so the ash collection efficiency by the slag coating layer on the inner wall surface increases, and the complete combustion in the furnace is enhanced.

When a flue gas recycle incineration furnace is applied, by connecting the flue gas recycle blower for the incineration furnace with the downstream end of the ash fusion furnace as the means to introduce the high temperature unburnt gas of the incineration furnace into the ash fusion furnace, long and stable operation is attained without using a special high temperature blower.

When the hot air generator is applied to the ash fusion furnace, by using the high temperature flue gas discharged from the hot air generator for improving the mixing of atmosphere inside of the incineration furnace, the low pollution of combusted flue gas and the effective use of sensible heat of the flue gas (heat recovery by the boiler downstream from the incineration furnace) are attained.

Furthermore, by injecting a fuel containing carbon into the ash heat treatment furnace, zones near the inner wall surface are selectively heated, and the ash is heat-treated in a reducing atmosphere, so the decomposition efficiency of dioxins in the ash increases, and the durability of furnace materials further increases.

By using an ejector which uses high temperature air as the driving fluid to carry the flue gas of the waste incineration furnace to inject the gas into the waste incineration furnace, and also to carry the combustible gas generated in the waste incineration furnace to inject the gas into the ash heat treatment furnace, the combustion with low air ratio becomes possible, and the volume of flue gas decreases, which leads to energy saving operation. In addition, since the flame inside of the furnace becomes stable, low pollution operation is attained. Furthermore, since the power consumption for flue gas recycle becomes less, energy saving operation is available, and since the high temperature gas containing dust is stably transferred, heat efficiency increases to realize energy saving operation.

By using the flue gas downstream from the induced fan located in the flue gas venting system instead of the high temperature air as the driving fluid for ejector, the investment cost decreases, and the electric power consumption decreases. In addition, the heat efficiency increases, thus attaining energy saving operation. Furthermore, since the O₂ remained in the flue gas is used as the O₂ for combustion in the incineration furnace, the volume of supplied air reduces, and the volume of flue gas also decreases. As a result, energy saving operation and CO₂ countermeasures are realized.

By installing a unit to regulate at least one of the fuel and the oxidizing agent to maintain the atmosphere inside of the ash fusion furnace to a reducing state, the vaporization of heavy metals in the ash is enhanced, and the decomposition ratio of dioxins is increased. Since the zones near the inner wall surface of the ash fusion furnace become a reducing atmosphere, the burning damage of inner walls is suppressed.

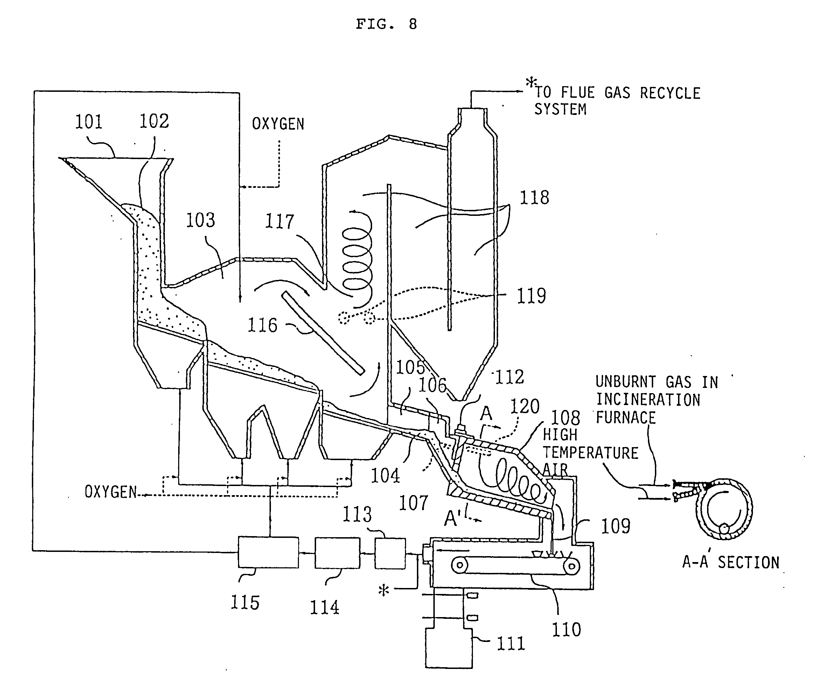

Fig. 8 shows a waste treatment apparatus. In the figure, the reference number 101 represents a hopper, 102 represents the waste, 103 represents a main combustion chamber, 104 represents the incinerated ash, 105 represents a tapering down gas duct, 106 represents a section for detecting and removing materials unsuitable for heat treatment, 107 represents grates, 108 represents an ash heat treatment furnace, 109 represents the slag, 110 represents a slag conveyer, 111 represents a slag basin, 112 represents an adjusting damper, 113 represents a dust collector, 114 represents a heat exchanger, 115 represents a flue gas recycle blower, 116 represents an intermediate ceiling, 118 represents a waste heat boiler, 119 represents an injection opening for agitation gas inside of the furnace, and 120 represents a gas injection opening.

The waste 102 charged to the hopper lis ignited to burn in the main combustion chamber 103 by hot air supplied from beneath the grates or by stabilizing burners (not shown) located inside of the main combustion chamber, as described later. The incinerated ash 104 generated by the combustion of waste passes through the tapered down gas duct 105 and enters the section for detecting and removing materials unsuitable for heat treatment 106. The section for detecting and removing materials unsuitable for heat treatment 106 is provided with a detector for detecting materials unsuitable for heat treatment and a device for discharging thus detected materials unsuitable for heat treatment to outside the furnace. The incinerated ash 104 after removing the materials unsuitable for heat treatment flows down through the grates 107, and is heat-treated in the ash heat treatment furnace 108 to become the slag 109, which is then fallen down onto the slag conveyer 110, and is stored in the slag basin 111. Alternatively, both the slag conveyer 110 and the slag basin 111 are not provided, and the fused slag may be dropped into water to produce granulated slag.

Between the section for detecting and removing materials unsuitable for heat treatment 106 and the ash heat treatment furnace 108, an adjusting damper 112 is located to suppress the flow rate of flue gas from the waste incineration furnace to the ash heat treatment furnace 108, thus preventing the combusted flue gas from entering into the ash heat treatment furnace 108. Alternatively, the adjusting damper 112 may not be installed, and the operation may be done to keep the upstream from the ash heat treatment furnace 108 filled with the incinerated ash 104, thus letting the filled incinerated ash 104 function as a material seal.

As described later, a gas injection opening 120 is located to the ash heat treatment furnace 108. As seen in A-A' cross sectional view in Fig. 1, a mixed gas of high temperature air and the combustible gas (unburnt gas inside of the incineration furnace ) generated in the waste incineration furnace is injected into the furnace at a high velocity through the gas injection opening 120. Since the direction of injecting high temperature mixed gas is tangential to the inner wall surface of the ash heat treatment furnace 108, as illustrated in A-A' view, the injected high temperature mixed gas forms a swirling flame or a cylindrical flame inside of the ash heat treatment furnace 108, as shown in the figure.

As a result, the inner walls of the furnace are heated almost uniformly by the radiation or direct heat transfer from the flame. Consequently, troubles of burning caused from local solidification of dust and slag or from superheating of inner walls are suppressed. Furthermore, owing to the centrifugal effect of the swirling flow of atmosphere inside of the ash fusion furnace, the incinerated ash and the dust in gas stream are collected by the slag coating layer at the surface section of the inner walls, so that a high slag-formation efficiency is attained.

The flue gas generated from the combustion of unburnt gas of the incineration furnace at inside of the ash heat treatment furnace 108 is sent to the flue gas recycle system of the waste incineration furnace. After separating dust in the dust collector 113, the flue gas is cooled in the heat exchanger 114, which is then mixed with oxygen via the flue gas recycle blower 115, and is again injected into the waste incineration furnace. Alternative to that type of system, there may use a system in which a separate blower is applied to increase the pressure of the flue gas passed through the ash heat treatment furnace 108, and to use the pressurized flue gas as an agitation gas in a secondary combustion chamber 117 which is described later.

Within the main combustion chamber 103, an intermediate ceiling 116 is located to divide the flue gas stream into two routes (shown in arrows in the figure). The flue gas passing over the intermediate ceiling 116 is rich in unburnt gas, while the flue gas passing below the intermediate ceiling 116 is rich in unreacted oxygen. Nevertheless, the composition of each of these flue gases is relatively stable.

A part of the flue gas passing over the intermediate ceiling 116, or the flue gas rich in unburnt, is taken out to be injected into the ash heat treatment furnace as the unburnt gas in the incineration furnace to use as the main heat source of the ash heat treatment furnace 108. That is, a part of the flue gas passing over the intermediate ceiling 116 is sucked into the ash heat treatment furnace 108 via the gas injection opening 120 by a negative pressure generated by the flue gas recycle blower 115. Consequently, no special blower to inject the unburnt gas in the incineration furnace into the ash heat treatment furnace 108 is required.

On the other hand, the flue gas passing below the intermediate ceiling 116 contains small amount of unburnt ingredients. Accordingly, even when the flue gas is injected into the ash heat treatment furnace 108, the gas does not function as the fuel but rather gives bad influence by reducing the temperature in the ash heat treatment furnace 108, and by allowing invasion of dioxins and their starting substance chlorine which are included in the flue gas into the ash heat treatment furnace. The above-described adjusting damper 112 acts to interfere the inflow of the flue gas into the ash heat treatment furnace 108. In concrete terms, the internal pressure of the furnace at near the boundary between the main combustion chamber 103 and the tapered down gas duct 105 and the internal pressure of the ash heat treatment furnace 108 are detected, and the opening of the damper 112 is regulated to keep the latter internal pressure at a slightly higher level than the former internal pressure.

Depending on the design condition of the furnace, the latter internal pressure unavoidably becomes lower than the former internal pressure, (for example, in a mode shown in Fig. 8, the unburnt gas in the incineration furnace is sent into the ash heat treatment furnace 108 using the flue gas recycle blower 115, so the latter internal pressure becomes lower than the former internal pressure.) Even in that case, the damper opening is adjusted to keep the pressure difference as small as possible, thus to prevent the flue gas from coming in the ash heat treatment furnace via the tapered down gas duct 105 as far as possible.)

Most part of the flue gas passed over/beneath the intermediate ceiling 116 enter the secondary combustion chamber 117, where the flue gas is agitated by an agitation gas which is injected from the injection openings for agitation gas, 119, to form a swirling flow, thus efficiently conducting the secondary combustion. After subjected to heat exchange in the waste heat boiler 118, most part of the flue gas enters the flue gas recycle system which comprises the dust collector 113, the heat exchanger 114, and the flue gas recycle blower 115, then is mixed with oxygen, and is injected again into the waste incineration furnace. A part of the flue gas is sent to the flue gas treatment unit to remove dust and toxic materials, then is vented to atmosphere via a stack.

According to the apparatus shown in Fig. 8, a mixed gas of oxygen and the flue gas passed through the flue gas recycle blower 115 is injected into the main combustion chamber 103 from beneath the grates. If, however, the flue gas contains HCl or other corrosive compounds, the grates may be corroded. In that case, it is preferable to inject air from beneath the grates, and preferably the mixed gas of oxygen and the flue gas is directly injected into the main combustion chamber.

The high temperature air which is injected into the ash heat treatment furnace 108 is prepared by heating air using a hot air generator (not shown). Generally, a fuel is combusted, and the air is heated by the combustion heat. When the combusted flue gas generated in the process is used as the agitation gas which is injected through the opening 119 for agitation gas, the agitation of atmosphere inside of the furnace is attained without changing the excess air ratio, and reduction of NOx content in the flue gas is effectively done. In addition, the sensible heat of the combusted flue gas of the hot air generator is able to be recovered by the waste heat boiler 118.

According to the example mode, a mixed gas of unburnt gas in the incineration furnace with high temperature air is injected into the ash heat treatment furnace 108. The high temperature air may be replaced with an oxidizing agent in which oxygen content is controlled. The oxidizing agent is, for example, produced by mixing oxygen with the flue gas of waste incineration furnace. With the preparation method, when the oxygen concentration in the oxidizing agent is set to a high level, the absolute flow rate of the oxidizing agent reduces, thus the gas retention time in the ash heat treatment furnace increases, which achieves further high slag forming efficiency. By setting the oxygen concentration in the oxidizing agent to a low level, the low NOx combustion in the ash heat treatment furnace is realized.

In addition, it is preferred to detect the temperature inside of the ash heat treatment furnace 108 and to maintain the temperature to a constant level by regulating the temperature of the high temperature air or of the oxidizing agent in which the oxygen concentration is controlled. By the action, even when the condition of the waste incineration furnace varies, and varying the properties of combusted flue gas and of incinerated ash, long and stable operation is secured. Owing to the advantages, even if the operation gives the priority of stability and pollution reduction at the waste incineration furnace, the variations of properties of slag generated in the ash heat treatment furnace 108 are suppressed to a low level.

Alternative means may be applied to regulate the temperature inside of the ash heat treatment furnace 8. According to an alternative means, the temperature inside of the ash heat treatment furnace 8 is preferably controlled to 800 or above. With the temperature control, simultaneous reduction of the content of dioxins and heavy metals in the ash is realized, which then allowing the effective use of the ash after heat treatment. In addition, since the temperature inside of the furnace exceeds the fusion point of major heavy metals, these heavy metals are prevented from solidify within the furnace. The temperature inside of the ash heat treatment furnace 108 is preferably controlled to not higher than the fusion point of the ash. The kinds, melting points, boiling points (or sublimation points) of heavy metals which specifically may induce problems are listed below.

**Table 1**

| Name | Melting point ( ) | Boiling point ( ) |
|---|---|---|
| Lead (Pb) | 327 | 1750 |
| Arsenic (As) | 871 | (Sublimation point: 616) |
| Cadmium (Cd) | 321 | 766 |
| Mercury (Hg) | -38.8 | 357 |
| Lead chloride (PbCl₂) | 501 | 954 |

As to these heavy metals, pure lead generated during the treatment of ash is small amount, and most part of the lead are generated in a form of compound such as lead chloride. Consequently, as seen in Table 1, to vaporize major heavy metals in the ash, it is enough to heat the system to a level not exceeding the ash fusion temperature (ranging from 1100 to 1400 ) even when the temperature distribution within the furnace is taken into account. Therefore, the maximum heating temperature is preferably selected to a level not higher than 1000 to surely vaporize major heavy metals in the ash without fusing the ash, though the detailed temperature level depends on the kind of ash.

According to an experiment of an incinerated ash of municipal waste filling in a tubular furnace to heat up to 1000 in a reducing atmosphere, the lead which had existed in a range of from 1000 to 2000 mg/kg before the heat treatment reduced to 600 mg/kg or less, which is below the regulated level of the Soil Environmental Standard.

Alternatively, a feeder of an auxiliary fuel may be installed to regulate the temperature inside of the ash heat treatment furnace 108 by injecting the auxiliary fuel into the ash heat treatment furnace 108 and by regulating the flow rate of the auxiliary fuel. Since the temperature inside of the ash heat treatment furnace 108 is accurately controlled, the temperature inside of the ash heat treatment furnace can promptly be re-adjusted without changing the operating condition of the incineration furnace even when the condition of the incineration furnace suddenly becomes worse or the tap opening of the ash heat treatment furnace 108 tends to be plugged by some causes. Owing to the advantageous characteristic, the plant operation hours are able to be maintained to a high level. Furthermore, since the temperatures of the incineration furnace and of the ash heat treatment furnace can be separately adjusted, the time for start up and shut down of the plant is shortened.

The injecting auxiliary fuel is preferably a fuel containing carbon in a form of, for example, powder. With that type of fuel, the fuel containing carbon is pressed against the inner wall surface by the centrifugal effect as in the case of ash, further the fuel containing carbon burns at the place, thus the atmosphere in the vicinity of ash becomes reducing atmosphere. Consequently, the vaporization of heavy metals from ash is further enhanced. Since the region near the inner wall surface also becomes a reducing atmosphere, the burning damage of the inner walls is suppressed. As a result, the operation hours of the facility increases, and the maintenance cost for replacing furnace materials decreases.

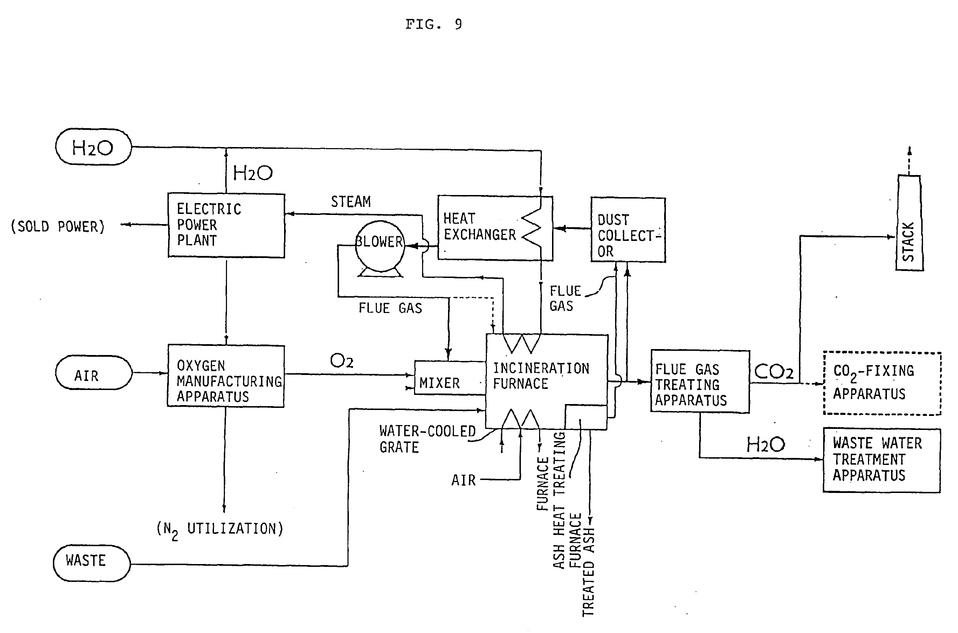

Fig. 9 shows a system diagram of flue gas, steam, and other materials around a waste incineration and heat treatment furnace.

The oxygen separated from air by an oxygen production unit is mixed with the flue gas of the flue gas recycle system in a mixer, then the mixture is supplied to the incineration furnace to incinerate the waste. Most part of the flue gas of the incineration furnace enter the flue gas recycle system which comprises a dust collector, a heat exchanger, and a blower. The flue gas is mixed with oxygen, then is again charged to the incineration furnace. In this case, air is injected from beneath the grates, while the flue gas which is mixed with oxygen in the mixer is fed directly into the combustion chamber. By varying the ratio of mixing flue gas and oxygen, the state of incineration of waste inside of the incineration furnace is able to be controlled. In addition, different from the case of air injection, excessive amount of nitrogen is not fed into the furnace, thus the flue gas volume becomes less, and the compact design of the flue gas treatment facility is available.

As to the flue gas which does not flow into the flue gas recycle system, a part thereof enters the ash heat treatment furnace 108, while the other thereof enter the flue gas treatment unit, as described before. The flue gas which combusted in the ash heat treatment furnace and heated the incinerated ash is sent to the dust collector as described above, then is fed to the flue gas recycle system. The flue gas which enters the flue gas treatment unit is vented to atmosphere via a stack after separating moisture. When a CO₂ fixing unit is provided, the CO₂ in the flue gas is fixed and is not emitted to atmosphere. The water content separated from the flue gas in the flue gas treatment unit is treated by a waste water treatment unit before discharging to outside of the system.

Most part of the sensible heat of the flue gas of the incineration furnace are used to generate steam at the flue gas boiler. The generated steam is used in a power plant. In the case of Fig. 9, the heat exchanger is used to heat the boiler feed water to the waste heat boiler.

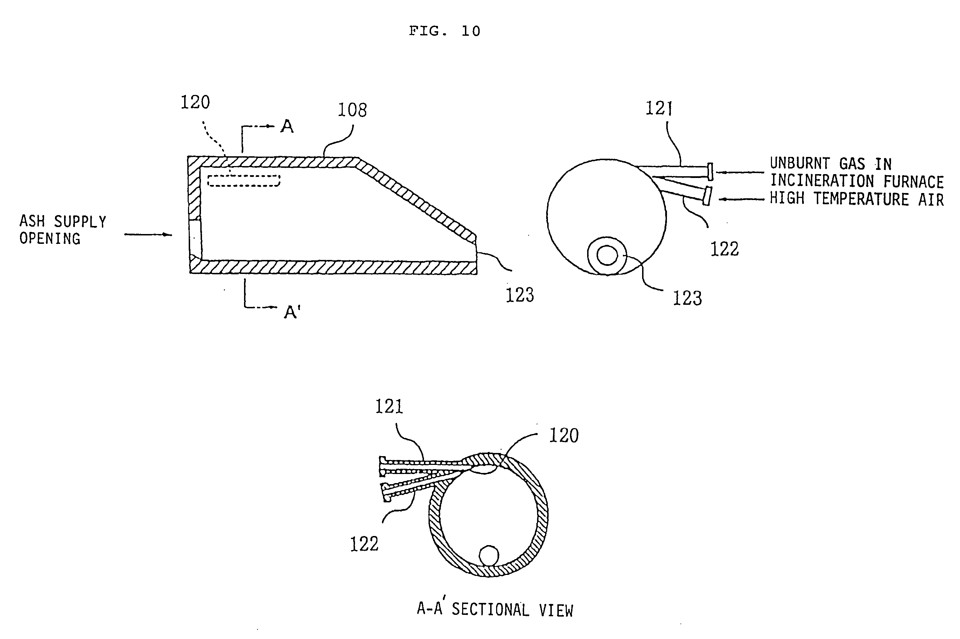

Fig.10 shows a detailed drawing of an example of an ash heat treatment furnace. In the succeeding figures, the same reference numbers are allotted to the same respective components described in previous figures, thus omitting the repetition of description. In Fig. 10, the reference number 121 represents an injection opening for unburnt gas in the incineration furnace, 122 represents an injection opening for high temperature air, and 123 represents an exit.

The ash heat treatment furnace 108 has a near-circular cross section, and has a shape of tapering down toward the exit 123. A gas injection opening 120 is located on a part of the side wall at upstream section of the furnace 108, which gas injection opening 120 is connected with the injection opening for unburnt gas in the incineration furnace, 121, and with the injection opening for high temperature air, 122. The flue gas injected from the injection opening for unburnt gas in the incineration furnace, 121, and the high temperature air injected through the injection opening for high temperature air, 122, are mixed together at the gas injection opening 120, which mixture is then injected in tangential direction to the cross section (near circular) of the ash heat treatment furnace 8, or along the circumference of the cross section. Thus, a swirling flame or a cylindrical flame nearly symmetrical to the furnace axis is formed.
As a result, the inner walls of the furnace are heated almost uniformly by the radiation or direct heat transfer from the flame. Consequently, troubles of burning caused from local solidification of dust and slag or from superheating of inner walls are suppressed. Furthermore, owing to the centrifugal effect of the swirling flow of atmosphere inside of the ash heat treatment furnace, the incinerated ash and the dust in gas stream are collected by the slag coating layer at the surface section of the inner walls, so that a high slag-formation efficiency is attained. Since the waste incineration furnace and the ash heat treatment furnace 108 are directly connected to each other, the high temperature ash is introduced into the ash heat treatment furnace 108 without cooled, and the heat efficiency increases.

The ash heat treatment furnace 108 is tapering down to the downstream side toward the exit 123 so that the swirling velocity of the flame increases in downstream side thereof. Accordingly, the collection efficiency of ash and dust increases. In addition, heating of inner walls by flame is performed more effectively. Furthermore, since the slag is tapped concentrated on one position, the tap opening is difficult to be plugged. Also the enhanced mixing of gas inside of the furnace promotes the low pollution flue gas.

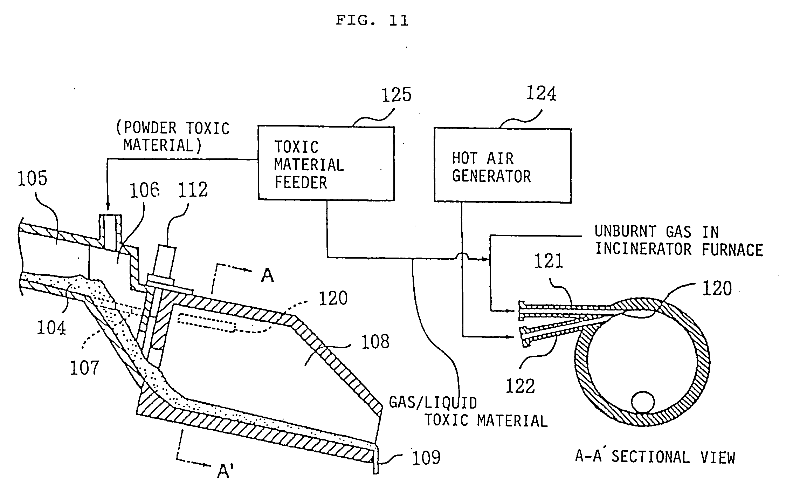

Fig. 11 shows a detailed drawing of a tapering down flue gas duct and a connection section between a section for detecting and removing materials unsuitable for heat treatment and an ash heat treatment furnace. In the figure, the reference number 124 represents a hot air generator, and 125 represents a toxic materials feeder. Powder toxic materials such as PCB are charged from the toxic materials feeder 125 into the section for detecting and removing materials unsuitable for heat treatment 106, while gaseous and liquid toxic materials such as fly ash and waste oils are injected into the heat treatment furnace 108 along with the unburnt gas in the incineration furnace through the injection opening for unburnt gas in the incineration furnace, 121. These materials are decomposed in the high temperature ash heat treatment furnace 108, and finally are absorbed and treated in the flue gas treatment unit shown in Fig. 9.

The powder toxic materials are not injected from the injection opening for unburnt gas in the incineration furnace, 121, but is charged to the section for detecting and removing materials unsuitable for heat treatment, 106. If the powder materials are injected from the injection opening for high temperature air, 22, then they are scattered in the ash heat treatment furnace 108, and may be discharged untreated from the exit of the ash treatment furnace 108 before sufficiently progressing the decomposition thereof. Thus, the separate injections are applied to prevent that kind of troubles. Consequently, the decomposition is enhanced by charging the powder toxic materials to the section for detecting and removing materials unsuitable for heat treatment, 106, and by charging the gaseous and liquid toxic materials to the ash heat treatment furnace 108 along with the incinerated ash 104.

An adjusting damper 112 is located at boundary between the section for detecting and removing materials unsuitable for heat treatment, 106, and the ash heat treatment furnace 108, and the adjusting damper 112 is lifted by hydraulic cylinders to suppress the inflow rate of the flue gas from the waste incineration furnace to the ash heat treatment furnace 108, as described before. In actual operations, the opening of the damper is adjusted to nearly equal to the level of surface of the incinerated ash 4.

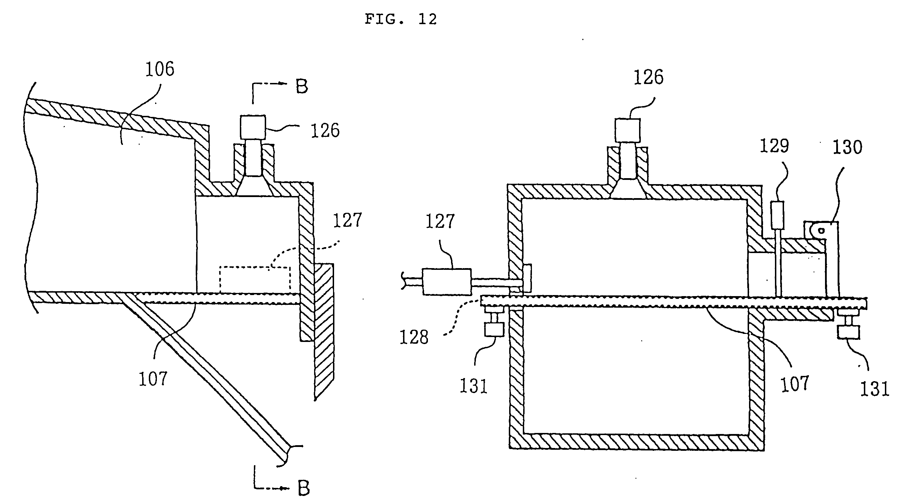

Fig. 12 shows a detailed drawing of a section for detecting and removing materials unsuitable for heat treatment. In Fig. 12, the reference number 126 represents a TV camera, 127 represents a pusher, 128 represents an intake of cooling air, 129 represents a shield plate, 130 represents a cover, and 131 represents a vibrator.

The materials unsuitable for heat treatment are large lumps of non-flammable materials such as steels which do not contain toxic substances such as dioxins. When those kinds of materials enter the ash heat treatment furnace, they may damage the equipment, may induce bridging of incinerated ash at near the inlet of the furnace, and may plug the tap opening. Therefore, a grid 107 is located at the exit side of the section for detecting and removing materials unsuitable for heat treatment, 106, to prevent the materials unsuitable for heat treatment from dropping by the grid 107 thus to prevent from entering into the ash heat treatment furnace. The grid 107 has a hollow structure, and is cooled by air supplied from the intake of cooling air 127.

The materials unsuitable for heat treatment remained on the grid 107 are monitored by the TV camera 126, and they are discharged from the furnace by manipulating the pusher 127. At this moment, the shield plate 129 is lifted up to form a space to allow the materials unsuitable for heat treatment passes there through. The cover 130 is hung down from an upper structure by hinges, and is swung under a pressing force of the materials unsuitable for heat treatment, thus the materials unsuitable for heat treatment are discharged from the furnace through the cover 130 position. After that, the pusher 127 is returned to original position, and the shield plate 129 is lowered to seal the furnace.

The grid 107 is provided with the vibrator 131 to give excitation to the grid 107. By the action, the incinerated ash on the grid 107 falls down through the grid 107, not remaining on the grid 107, then is sent to the ash heat treatment furnace.

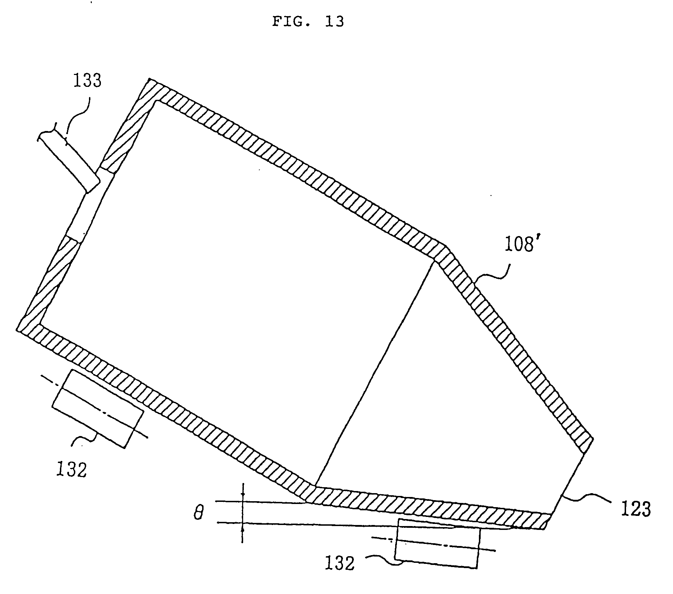

Fig. 13 shows a waste treatment apparatus, wherein the ash heat treatment furnace is a rotary kiln furnace. In Fig. 13, the reference number 108' represents a rotary kiln which is the ash heat treatment furnace, 132 represents a roller, and 133 represents an injection opening for a mixed gas of combustible gas and high temperature air. The roller 132 rotates to drive the rotary kiln 108'. The rotary kiln 108' inclines downward toward downstream, and has a tapering down cross section to downstream side.

The combustible gas and the high temperature air are mixed together at immediately before the injection opening 133, then are injected into the rotary kiln 108'. The injection direction is a tilted angle to the wall face along the gas passage, not crossing the center axis of the rotary kiln 108'. As a result, a swirling flame or a cylindrical flame is formed in the rotary kiln 188'.

Since the ash heat treatment furnace is designed in a rotary kiln type, it inclines downward toward downstream and since the furnace rotates, even when materials unsuitable for heat treatment exist, they are not remained in the furnace but transferred forcefully toward downstream. In addition, dust attached to the inner wall surface of the ash heat treatment furnace is peeled off from the wall after growing to a certain size or thickness by its own weight, and it is transported to downstream, so there is no need of cleaning of inside the ash heat treatment furnace, which attaining labor saving and increased operation hours of the facility.

Fig. 14 shows a schematic drawing of recycle system of a combustion gas inside of furnace and a combusted flue gas using an ejector as an example of a mode according to the present invention. In Fig. 114, the reference numbers 134 and 135 represent ejectors. A part of the combusted flue gas (ERG) after the secondary combustion at near the inlet of the waste heat boiler 118 passes through a flue gas recycle piping to enter the ejector 134. To the ejector 134, high temperature air (at temperatures not less than the ignition point of the combusted flue gas) is supplied as the driving fluid. Thus, ERG is sucked to the ejector 134, where it is mixed with the high temperature air, and the mixture is injected into the main combustion chamber 3.

A part of the primary combusted flue gas (unburnt gas in the furnace) generated in the main combustion chamber 103 are withdrawn through a piping, and are fed to the ejector 135. To the ejector 135, high temperature air (at temperatures not less than the ignition point of the unburnt gas in the furnace) is supplied as the driving fluid. Thus, the primary combusted flue gas is sucked to the ejector 135, where it is mixed with the high temperature air, and the mixture is injected into the ash heat treatment furnace 108.

Ejector has a simple structure and has less possibility of deposition of dust in the flue gas. It is preferred to insert a high temperature air piping into the primary combusted gas piping of the flue gas pipeline, and to apply an ejector which has a simple structure to eject high temperature air along the direction of the primary combustion gas piping in the flue gas pipeline. It is also preferred to minimize the bend sections in the flue gas pipeline to prevent deposition of the dust of the flue gas into the piping. Furthermore, preferably a pulse burner is mounted in the flue gas pipeline to generate pulsation to the flue gas inside of the flue gas pipeline, thus suppressing the dust deposition.

When an induced fan is installed in the flue gas venting system in Fig. 9, or in the route from the incineration furnace to the stack, the flue gas downstream from the induced fan may be used instead of the high temperature air. Particularly when the induced fan is located at succeeding stage of the flue gas treatment unit, the flue gas downstream from the induced fan has already finished its dust removal in the flue gas treatment unit, and the flue gas has a positive pressure, so that the flue gas is suitably used as the driving fluid for ejector. By this means, a blower exclusive use for flue gas recycle is not necessary, which reducing the investment cost and reducing the electric power consumption. Since, in addition, the sensible heat of the flue gas as the driving fluid is recovered, the heat efficiency increases, thus attaining energy saving. Furthermore, In addition, since O₂ remained in the flue gas is able to be used as O₂ for combustion in the incineration furnace, the quantity of supplied air is reduced, and the quantity of flue gas is also reduced. As a result, energy saving and CO₂ measures are achieved.

Alternatively, though not shown in the figure, the atmosphere in the ash heat treatment furnace 108 may be monitored using O₂ meter, CO meter, CO₂ meter, and the like, and an atmosphere regulator inside of the ash heat treatment furnace may be applied to control either of the fuel fed from a stabilizing burner (not shown) located in the main combustion chamber 103, the oxidizing agent such as hot air injected into the main combustion chamber, or auxiliary gas or oxidizing agent such as high temperature air injected from the gas injection opening 120 into the ash heat treatment furnace 108 so as the atmosphere inside of the furnace to maintain a reducing state. In that manner, by maintaining the atmosphere inside of the ash heat treatment furnace 108 positively in a reducing state, the vaporization of heavy metals in ash is enhanced, and the decomposition ratio of dioxins is increased. In addition, the atmosphere in the vicinity of the inner wall surface of the ash heat treatment furnace becomes a reducing state, thus the inner walls are prevented from burning damage.

As described above, according to the present invention, the waste incineration furnace and the ash heat treatment furnace are directly connected to each other, and a part of the unburnt gas generated in the incineration furnace and a highly reactive oxidizing agent such as high temperature air and air rich in oxygen are injected into the ash heat treatment furnace in a swirling pattern, thus continuously treating the generated ash by heat treatment while incinerating the waste. Consequently, there avoided the main disadvantages of prior arts, such as local solidification of slag caused from non-uniformity of temperature distribution inside of the ash heat treatment furnace and tap opening plugging caused from variations of properties of unburnt ingredients in combusted flue gas and in incinerated ash. Thus the long stable operation of the ash heat treatment furnace and the utilization of slag are attained, and the energy saving and the labor saving as the total system are realized.

In particular, by setting the temperatures inside of the ash heat treatment furnace between the decomposition point of dioxins and the fusion point of the ash, the operation allows to decompose dioxins and to vaporize toxic heavy metals without inducing troubles caused from fusion and solidification of ash.

Furthermore, by applying highly reactive oxidizing agent, auxiliary fuel, or swirling combustion for the ash heat treatment furnace, the stable combustion inside of the furnace is enhanced, and the discharge concentration of toxic materials such as dioxins and CO is kept to a low level, further the control of furnace becomes easy, and the burning damage of inner walls and other portions is avoided.

Also, by additional application of a unit for removing materials unsuitable for heat treatment, an adjusting damper, or a rotary kiln to the ash heat treatment furnace, effective heat is transmitted to the incinerated ash to be heat-treated, and the troubles of slag solidification inside of the ash heat treatment furnace is eliminated, thus drastically increasing the operation hours.

On the other hand, by applying a tapering down furnace shape as a means to suppress the emissions of ash from the exit of the ash heat treatment furnace, the swirling velocity significantly increases toward downstream, so the ash collection efficiency by the slag coating layer on the inner wall surface increases, and the complete combustion in the furnace is enhanced.

When a flue gas recycle incineration furnace is applied, by connecting the flue gas recycle blower for the incineration furnace with the downstream end of the ash heat treatment furnace as the means to introduce the high temperature unburnt gas of the incineration furnace into the ash heat treatment furnace, long and stable operation is attained without using a special high temperature blower.

When the hot air generator is applied to the ash heat treatment furnace, the combustible gas generated in the incineration furnace is able to be introduced into the ash heat treatment furnace without employing the recycle blower by using the ejector effect of high temperature air at the inlet of the ash heat treatment furnace. By utilizing the high temperature flue gas discharged from the hot air generator to improve the mixing of atmosphere inside of the incineration furnace, the low pollution of combusted flue gas and the effective use of sensible heat of the flue gas (heat recovery by the boiler downstream from the incineration furnace) are attained.

Furthermore, by injecting a fuel containing carbon into the ash heat treatment furnace, zones near the inner wall surface are selectively heated, and the ash is heat-treated in a reducing atmosphere, so the decomposition efficiency of dioxins in the ash increases, and the durability of furnace materials further increases.

By using an ejector which uses high temperature air as the driving fluid to carry the flue gas of the waste incineration furnace to inject the gas into the waste incineration furnace, and also to carry the combustible gas generated in the waste incineration furnace to inject the gas into the ash heat treatment furnace, the combustion with low air ratio becomes possible, and the volume of flue gas decreases, which leads to energy saving operation. In addition, since the flame inside of the furnace becomes stable, low pollution operation is attained. Furthermore, since the power consumption for flue gas recycle becomes less, energy saving operation is available, and since the high temperature gas containing dust is stably transferred, heat efficiency increases to realize energy saving operation.

By using the flue gas downstream from the induced fan located in the flue gas venting system instead of the high temperature air as the driving fluid for ejector, the investment cost decreases, and the electric power consumption decreases. In addition, the heat efficiency increases, thus attaining energy saving operation. Furthermore, since the O₂ remained in the flue gas is used as the O₂ for combustion in the incineration furnace, the volume of supplied air reduces, and the volume of flue gas also decreases. As a result, energy saving operation and CO₂ countermeasures are realized.

By installing a unit to regulate at least one of the fuel and the oxidizing agent to maintain the atmosphere inside of the ash heat treatment furnace to a reducing state, the vaporization of heavy metals in the ash is enhanced, and the decomposition ratio of dioxins is increased. Since the zones near the inner wall surface of the ash heat treatment furnace become a reducing atmosphere, the burning damage of inner walls is suppressed.

## Claims

1. A waste treatment apparatus comprising:
a waste incineration furnace having a main combustion chamber and a waste heat boiler, said waste incineration furnace incinerating waste and generating ash and flue gas;
a recycle pipe for carrying the flue gas of the waste incineration furnace into the main combustion chamber; and
an ejector, which is connected to the recycle pipe, for recycling the flue gas to the main combustion chamber.

2. The waste treatment apparatus according to claim 1, wherein said recycle pipe is one that connects the exit of the waste heat boiler and the main combustion chamber.

3. The waste treatment apparatus according to claim 1, wherein said ejector transfers the flue gas of the waste incineration furnace using high temperature air as the driving fluid to inject the flue gas into the main combustion chamber.

4. The waste treatment apparatus according to claim 1, wherein said ejector transfers the flue gas of the waste incineration furnace to inject the flue gas into the main combustion chamber using a flue gas downstream from an induced fan located in a flue gas venting system as the driving fluid.
